(19) Europäisches Patentamt

European Patent Office

Office européen des brevets

(11) **EP 3 798 333 A1**

(12) **EUROPEAN PATENT APPLICATION**

(43) Date of publication:
**31.03.2021 Bulletin 2021/13**

(51) Int Cl.:
**C25B 1/04** *(2021.01)*          **C25B 11/04** *(2021.01)*
**B01J 37/00** *(2006.01)*

(21) Application number: **19199552.1**

(22) Date of filing: **25.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Max-Planck-Gesellschaft zur Förderung der Wissenschaften e.V.**
**80539 München (DE)**

(72) Inventors:
• **FELSER, Claudia**
 **06118 Halle (DE)**
• **SUN, Yan**
 **01187 Dresden (DE)**

(74) Representative: **Schweitzer, Klaus**
**Plate Schweitzer Zounek**
**Patentanwälte**
**Rheingaustrasse 196**
**65203 Wiesbaden (DE)**

(54) **METHOD FOR EVALUATING A CATALYST**

(57)    The present invention relates to a Method for evaluating a catalyst comprising the steps of calculating for a catalyst candidate the projected Berry Phase (PBP)

$$\gamma_{ij} = \left| \int_{\vec{k}} F'_{ij}(\vec{k}) d\vec{k} \right|$$

wherein

$$F'_{ij}(\vec{k}) = 2Im \sum_{E_n < E_{occ}} \sum_{m \neq n} \frac{\langle n\vec{k}|v'_i|m\vec{k}\rangle \langle m\vec{k}|v_j|n\vec{k}\rangle}{(E_{n\vec{k}} - E_{m\vec{k}})^2}$$

with $v'_i = \{pv_i\}$ and $p = \begin{pmatrix} 1 & 0 \\ 0 & 0 \end{pmatrix}$ and then evaluate the catalytic efficiency of the candidate by comparing the PBP of the candidate with the corresponding PBP of other known catalysts in the same Space Group as the candidate, wherein the higher the PBP ($\gamma$-value) of a catalyst candidate in a given Space Group the higher the exchange current density.

FIG. 1. The HER catalytic process is determined by the combined effect of electronic conductivity, carrier velocity, carrier mobility, adsorption energy, etc. The effects from the electronic structure can be classified into two groups of bulk contributions and surface contributions. The bulk contribution mainly depends on the band entanglements and the Fermi surface.

**Description**

BACKGROUND

Hydrogen fuels, generated by electrochemical water splitting, the so-called **H**ydrogen **E**volution **R**eaction (HER), are considered to be an ideal solution for the high global energy demand and a proper response to increasing environmental problems. The production of hydrogen by means of water splitting requires highly active and stable catalyst materials. The vital role of electrocatalysts in determining the efficiency of renewable energy conversion inspired the discovery of the relation between electrocatalysts and electronic structures, in which the so-called volcano-type plot which is based on absorption energy and the d-band model, has achieved great success. In the last decade, topological catalytic materials received much attention due to the robust surface states, and much effort has been put into the understanding of the catalyst from the topological band structure point of view.

PRIOR ART

US-A-2012/0145532 discloses the use of wide-spectrum excitation of noble metal core/semiconductor shell hybrid nanoparticles for unassisted photocatalytic splitting of water. The metal core/semiconductor shell composite nanoparticles comprise a noble metal (e.g. Au, Ag, Pt, Pd, or noble metal alloy) core which is coated with a wide-bandgap semiconductor photocatalyst (e.g. $TiO_2$, ZnS, $Nb_2O_5$) transparent to optical excitation in the visible and near-infrared (NIR) spectral ranges, consistent with plasmon absorption bands of the metal core.

US-A-2015/0010463 relates to a photocatalyst for generating hydrogen from water using visible light irradiation comprising nanocrystalline cobalt (II) oxide nanoparticles.

H. Li, C. Tsai, A. L. Koh, L. Cai, A. W. Contryman, A. H. Fragapane, J. Zhao, H. S. Han, H. C. Manoharan, F. Abild-Pedersen, J. K. Norskov, X. Zheng (Nat. Mater. 2016, 15, 48); D. Voiry, M. Salehi, R. Silva, T. Fujita, M. Chen, T. Asefa, V. B. Shenoy, G. Eda, M. Chhowalla, (Nano Lett. 2013, 13, 6222) and U. Maitra, U. Gupta, M. De, R. Datta, A. Govindaraj, C. N. R. Rao (Angew. Chem. Int. Ed. 2013, 52, 13057) report that among photocatalysts for hydrogen production, $MoS_2$ nanoparticles demonstrate high efficiency to catalyze both photochemical as well as electrochemical HER.

C. Tsai, K. Chan, J. K. Nørskov, F. Abild-Pedersen (Surf. Sci. 2015, 640, 133) found that metallic transition metal dichalcogenides (TMDs) are excellent candidates for HER.

Adv, Mater. 2017, 1606202, "Weyl semimetals as Hydrogen Evolution Cataysts" describes the transition-metal monopnictides NbP, TaP, NbAs, and TaAs as catalysts for HER. These monopnictides are topological Weyl semimetals.

Until now the volcano plot and the d-band model have provided the most successful pictures for the guiding principle of new catalysts [see references below].

S. Trasatti, "Work function, electronegativity, and electrochemical behaviour of metals: III. Electrolytic hydrogen evolution in acid solutions," Journal of Electroanalytical Chemistry and Interfacial Electrochemistry, vol. 39, no. 1, pp. 163-184, 1972.

J. Greeley, T. F. Jaramillo, J. Bonde, I. Chorkendorff, and J. K. Nørskov, "Computational high-throughput screening of electro catalytic materials for hydrogen evolution," in Materials For Sustainable Energy: A Collection of Peer-Reviewed Research and Review Articles from Nature Publishing Group, pp. 280-284, World Scientific, 2011.

P. Quaino, F. Juarez, E. Santos, and W. Schmickler, "Volcano plots in hydrogen electrocatalysis-uses and abuses," Beilstein journal of nanotechnology, vol. 5, p. 846, 2014.

A. R. Zeradjanin, J.-P. Grote, G. Polymeros, and K. J. Mayrhofer, "A Critical Review on Hydrogen Evolution Electro catalysis: Re-exploring the Volcano-relationship," Electroanalysis, vol. 28, no. 10, pp. 2256-2269, 2016.

B. Lundqvist, O. Gunnarsson, H. Hjelmberg, and J. Nørskov, "Theoretical description of molecule-metal interaction and surface reactions," Surface Science, vol. 89, no. 1-3, pp. 196-225, 1979.

J. N0rskov, "Theory of chemisorption and heterogeneous catalysis," Physica B+ C, vol. 127, no. 1-3, pp. 193 202, 1984.

B. Hammer and J. Norskov, "Electronic factors determining the reactivity of metal surfaces", Surface Science, vol. 343, p. 211, 1995.

H. Xin, A. Vojvodic, J, Voss, J. K. Nørskov, and F. Abild-Pedersen, "Effects of d-band shape on the surface reactivity of transition-metal alloys," Physical Review B, vol. 89, no. 11, p. 115114,2014.

Yet, despite all these efforts, there is still a lack in understanding the complex relation between the electronic band structure of a bulk catalytic material and the catalytic activity, e.g. expressed as exchange current density. Due to this lack of understanding there still does not exist a generically applicable method to pre-select suitable physical parameters for a good catalyst, and, thus, for a method which can be used as an "instruction manual" for making good catalysts.

## OBJECT OF THE INVENTION

It was, therefore, an object of the invention to provide a method to pre-select suitable physical parameters for a good catalyst, and, thus, for a method which can be used as an "instruction manual" for making good catalysts specifically a highly active electro catalysts for HER.

## BRIEF DESCRIPTION OF THE INVENTION

The present invention is based on the extraction of a pure intrinsic physical parameter of projected Berry phase (PBP) that is dependent only on the bulk electronic structure. Applying this parameter - the PBP - to all well-known non-magnetic transition metal electrocatalysts, resulted in a good linear relationship between the PBP and exchange current density for the hydrogen evolution reaction (HER) also taking into account the symmetry constraint (crystal space group). Accordingly, the pure bulk band structure effect of the PBP on electrochemical activities can be used to pre-select (search for) good catalyst, and for a method for making new improved catalysts specifically for making new highly active electrocatalysts for the HER.

## DETAILED DESCRIPTION OF THE INVENTION

The HER is a simple two-electron transfer process that involves the formation of only one intermediate. The initial step is the Volmer reaction, with the transfer of one electron to a proton to form adsorbed H on the catalyst surface ($H^+ + e^- + * \rightarrow H^*$, where * denotes the active centers and $H^*$ the intermediate). The desorbing of $H_2$ can be achieved either by a Tafel reaction ($2H^* \rightarrow H_2 + 2*$) or the Heyrovsky reaction ($H^+ + e^- + H^* \rightarrow H_2 + *$). In the picture of a volcano plot, the exchange current density vs. adsorption energy (or metal-hydrogen bond strength) gives a reasonable description of the chemical reaction process. It states that the metal-hydrogen bond should not be too strong or too weak. If the binding is too strong, the desorption step (Heyrovsky or Tafel) becomes difficult and limits the overall reaction rate; if the binding is too weak, the adsorption (Volmer) step will be the predominant mechanism and rate-limiting step. A further investigation of the volcano plot revealed that both the adsorption energy and the metal-hydrogen bond strength can be related to simple physical descriptors such as the work function, d-band center, or d-band shape of the catalyst. Because both the work function and the d-band center are physical parameters that are strongly dependent on the electronic structure, the efficiency of the catalyst can be understood from fundamental electrical properties.

Though the chemical reaction of the HER happens on the surface, the surface itself is strongly dependent on the bulk band structure. For example, the electrochemical performance of some catalysts is naturally much better than that of some others, regardless of their morphology, defects, or even mass loading. Pt is such catalyst, with high intrinsic activity. Also, for a given electrocatalyst, its catalytic efficiency can be improved by orders of magnitude by increasing the number of active centers and increasing its electrical conductivity and mobility by introducing defects, doping, nano-structuring, coupling with graphene, etc.. In the last decade, much effort was devoted to the understanding of the topological effect in catalysts, and some good catalysts were discovered in topological materials. It is believed that topological materials should be good candidates of high efficient catalysts, due to their robust surface states and high mobilities from linear band crossing. Very recently, the best catalyst, Pt, was proposed to be a $Z_2$ topological semimetal, implying the possible relation between topological band structure and catalyst. However, it was also found that the catalytic efficiencies, of the other similar $Z_2$ topological semimetals, such as Pt's neighbors Au and Ag, are far away from that of Pt.

Therefore, the quantum topological invariant does not seem to be a good descriptor that connects the catalytic efficiency and topological band structures, and some other non-integer quantity(ies) that is/are able to describe more details is/are needed from the intrinsic bulk band structure point of view.

As a consequence the possibility of extracting intrinsic physical parameters from the bulk electronic structure that strongly relate to the catalyst performance was determined. A parameter was defined that only depends on the intrinsic electronic structure of an ideal bulk single crystal, and it was found that this parameter follows a linear relationship with the catalyst efficiency of exchange current densities. This parameter provides a new direction to understand the catalysis process from the fundamental intrinsic physical parameters of the bulk electronic structure.

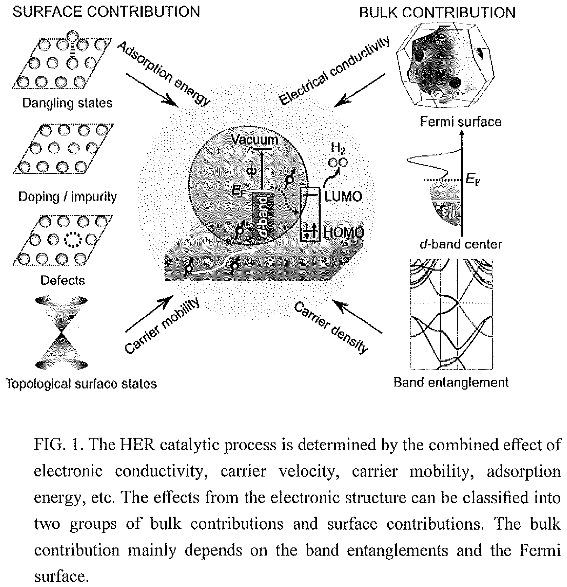

The underlying fundamentals of the present invention are schematically shown in Fig. 1. The HER occurs at the surface of the cathode of the electrochemical system in the solution. Electrons are first injected into the catalyst, which then populate the valence band up to the highest occupied molecular orbital (HOMO, Fermi level). With a negative applied potential on the cathode, the electron energy can be governed, raising the Fermi level to a level higher than that of the lowest unoccupied molecular orbital (LUMO) of the adsorbates ($H^+$). Thus, electrons can be filled into the empty orbital on H adsorbates and the reduction process (Volmer step) takes place. With this in mind, one can conclude that beside the chemical stability and economical consideration, a good HER catalyst with high catalytic performance is controlled jointly by various physical characteristics, including electrical conductivity, carrier velocity, carrier mobility, adsorption energy, etc.. All these physical parameters are determined by electronic structures. Since the surface of a given material is smoothly connected to the bulk of the material, the surface states (both topological surface states and dangling bonds) are originally determined by the bulk electronic structure in some sense. The effect of the bulk structure on the other physical properties are normally separated into two contributions: to the Fermi surface and to the band entanglement. The Fermi surface contribution depends on many details, such as impurities, defects, scatterings, etc.. Yet, the band entanglement is a pure intrinsic contribution that only depends on the ideal band structure of a pure single crystal. Thus, it should be robust as long as the crystal structure is clean enough (e.g. low number of defects). As a result one obtains a pure intrinsic bulk parameter that is related to the catalytic process through exchange current density.

Among the intrinsic parameters in solid-state crystals, the Berry phase and the Berry curvature of the electronic wave function have their special positions. They have a profound effect on the topological and electrical properties in materials that relate to the carrier density, velocity, mobility, etc..

The Berry phase is a difference acquired over the course of a cycle, when a system is subjected to cyclic adiabatic change of a physical parameter e.g. the magnetic field, which results from the geometrical properties of the parameter space of the Hamiltonian (see https://en.wikipedia.org/wi-ki/Geometric phase). The Berry phase is the integral of the Berry curvature across the whole reciprocal space.

The inherent advantage of the Berry phase makes it an acceptable candidate to analyze the intrinsic effect of the electronic structure in the catalyst. However, because the Berry curvature is odd with respect to time reversal operation, and even with respect to inversion operation, there is no Berry phase (integral of Berry curvature across the whole reciprocal space) in non-magnetic systems, and thus the Berry curvature is forced to be zero at any point in a system with combined time reversal and inversion symmetry. Because most HER catalysts are non-magnetic compounds (such as the transition metals) with highly symmetrical crystal structures, the strict symmetry requirement of the Berry phase strongly limits their application in catalyst systems.

From the definition of Berry curvature,

$$F_{ij}^0(\vec{k}) = 2Im \sum_{E_n < E_{occ}} \sum_{m \neq n} \frac{\langle n\vec{k}|v_i|m\vec{k}\rangle \langle m\vec{k}|v_j|n\vec{k}\rangle}{(E_{n\vec{k}} - E_{m\vec{k}})^2} \qquad (1)$$

wherein

$v_i$ and $v_j$ are velocity operators (with i,j=x,y,z), and
$|n\vec{k}\rangle$ is the eigenvector for Hamiltonian H at the eigenvalue $E_{n\vec{k}}$ one can deduce the important characteristic that the size of the Berry curvature can reflect the strength (I) of entanglements of the states at different bands and transversal current perpendicular to the extra field (II). Therefore, one can now extract another (new) parameter from the Berry curvature that satisfies the requirement to reflect these two properties (I) and (II), even with respect to time reversal symmetry. This new parameter is defined as

$$F_{ij}'(\vec{k}) = 2Im \sum_{E_n < E_{occ}} \sum_{m \neq n} \frac{\langle n\vec{k}|v'_i|m\vec{k}\rangle \langle m\vec{k}|v_j|n\vec{k}\rangle}{(E_{n\vec{k}} - E_{m\vec{k}})^2} \qquad (2)$$

$$p = \begin{pmatrix} 1 & 0 \\ 0 & 0 \end{pmatrix}.$$

with $v'_i = \{pv_i\}$ and

By using the project operator p, only half of the wave function is used, and Eq. (2) becomes even with respect to time reversal operation, but it can still reflect the band entanglements and transversal carrier current. In analogy to

$$F_{ij}'(\vec{k})$$

the ordinary Berry curvature, is defined as the "projected Berry curvature" (PBC) and the module of the integral of it $\gamma_{ij} = |\int_{\vec{k}} F'_{ij}(\vec{k}) d\vec{k}|$ is defined as the "projected Berry phase" (PBP), respectively. The largest component is denoted as $\gamma$.

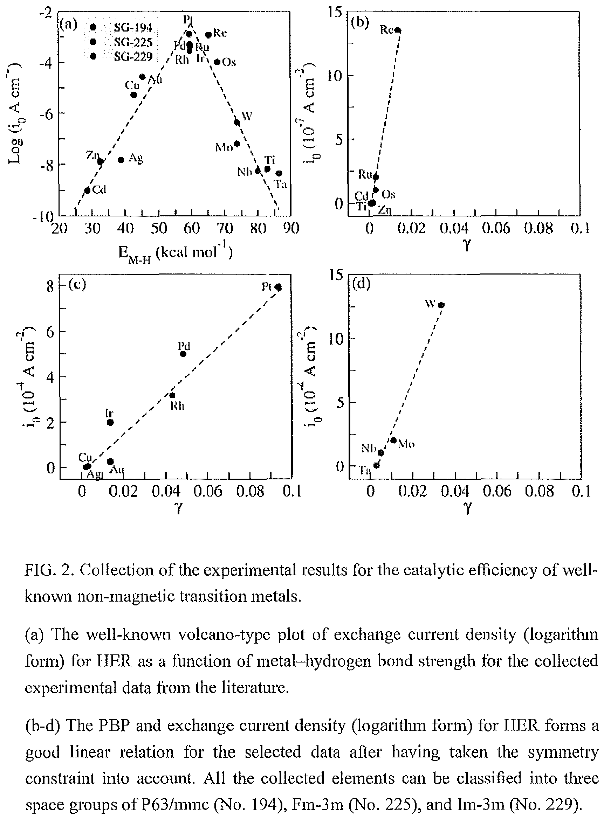

The new parameters PBC and PBP were tested on well-known transition metal catalysts, e.g. Pt, Pd, Rh, Ir, Au, Cu, Ag (all in Space Group 225); Re, Ru, Os, Zn, Ti, Cd (all in Space Group 194) and W, Mo, Nb, Ta (all in Space Group 229). The exchange current densities of HER for all these non-magnetic transition metal catalysts were collected to determine whether there is a correlation between the PBP and the efficiency of the catalyst (data from: S. Trasatti, "Work function, electronegativity, and electrochemical behaviour of metals: III. Electrolytic hydrogen evolution in acid solutions," Journal of Electroanalytical Chemistry and Interfacial Electrochemistry, vol. 39, no. 1, pp. 163-184, 1972; and T. J. Drummond, "Work functions of the transition metals and metal silicides," tech. rep., Sandia National Labs., Albuquerque, NM (US); Sandia National Labs ..., 1999.). The summarized exchange current densities are shown in Fig. 2. Fig. 2(a) is a reproduction of the exchange current density as a function of metal-hydrogen bond strength; it shows the famous volcano-type picture. Following Eq. (2), the ab-initio calculations of the PBP were performed for all the selected transition metals. It can be seen that the catalyst with the largest PBP sits on the top position of the volcano plot. Further, a good linear relation between the exchange current density and the PBP is found after taking the symmetry constraint into account.

As shown in Fig. 2, all the selected transition metals can be classified into three space groups of P63/mmc (No. 194), Fm-3m (No. 225), and Im-3m (No. 229). For the selected elements in each space group, the PBP and HER exchange current follow a good linear relation, see Figs. 2(b-d). Although the strictly mathematical logic is not clear so far, the excellent linear relation is not likely an accidental result. It reflects an important relation between transversal current and surface chemical reaction. From Figs. 2(b-d), one can see that the slope of the HER exchange current to the PBP are different for the three groups, which implies that the crystal structure plays an important role for the understanding of the catalysis process. The experimental measurements are strongly dependent on the details of environments, which will definitely introduce unexpected extrinsic effects. The fixed slope for a given space group illustrates that the extrinsic contributions should be similar in the same group of transition metals. Also, the three different slopes imply that the details of extrinsic contributions also vary among different groups.

Beside the metal-hydrogen bond strength, the catalytic efficiency can be also described by the work function and the d-band center (see above). Therefore, the PBP and the work function (or d-band center) should follow a similar relation as the metal-hydrogen bond strength.

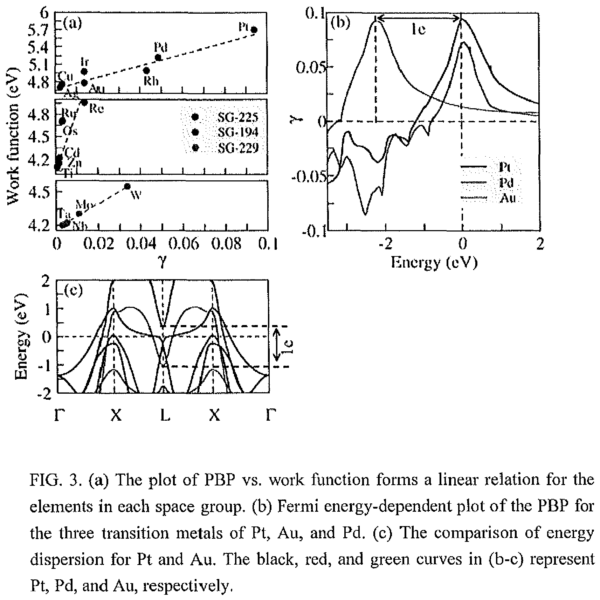

Taking the work function as an example, Fig. 3(a) shows the plot of the PBP as a function of the collected work functions from experimental studies (see S. Trasatti and T. J. Drummond supra). As expected, the PBP and work function also follow the linear relation for all three groups. Because the work function is strongly dependent on the location of the Fermi energy, one can expect more information about the PBP after taking the Fermi level into consideration.

To see the Fermi energy effect, one can make a comparison of the energy-dependent PBP for neighboring elements with only one electron difference. Since Pt is believed to be a state-of-the-art catalyst, Pt and its neighbor in the periodic table, Au (which is considered a poor catalyst from both the experiments and a theoretical point of view) was selected as the example. From the plot of the PBP as a function of the Fermi energy in Fig. 3(b), one can easily see that the Fermi energy-dependent PBP for Pt and Au almost share the same shape, only with a shift of one electron in the energy space.

Because Au and Pt only differ by one electron, the band structure of Au almost overlaps with that of Pt after shifting the Fermi level by one electron, as shown in Fig. 3(c). Yet, because of the difference of the band structure at the Fermi level, the distributions of the PBC are completely different for these two elements. Owing to the small band gap-induced strong band entanglement around the Fermi level, the PBC of Pt shows peak values around the high symmetry points of X and L. However, the strong band entanglement vanishes after the shift of Fermi energy, leading to the almost disappearance of the peak values in Au [see Fig. 3(c)]. The huge difference of PBC distribution in reciprocal space directly results from the difference of the integral of PBP. Therefore, the effect of location of the chemical potential to the PBP is consistent with that in the d-band center and work functions.

In summary, it was found that the PBP and the exchange current for the HER reaction follows a good linear relation after taking the symmetry constraint into consideration. For a given crystal structure, the effect of the extrinsic contribution is very similar to the same group of catalyst, and they vary significantly in different groups.

Taking the above considerations into account according to the invention one can now pre-select catalysts according to their calculated HER catalytic activity deduced from the projected Berry Phase (PBP) of a deliberately chosen catalyst candidate by comparing the PBP of the catalyst candidate with the PBP of other catalysts in the same Space Group.

Thus, the new method comprises the steps of:

calculating for a catalyst candidate the projected Berry Phase (PBP)

$$\gamma_{ij} = \left| \int_{\vec{k}} F'_{ij}(\vec{k}) d\vec{k} \right|$$

wherein

$$F'_{ij}(\vec{k}) = 2Im \sum_{E_n < E_{occ}} \sum_{m \neq n} \frac{\langle n\vec{k}|v'_i|m\vec{k}\rangle\langle m\vec{k}|v_j|n\vec{k}\rangle}{(E_{n\vec{k}} - E_{m\vec{k}})^2}$$

$$p = \begin{pmatrix} 1 & 0 \\ 0 & 0 \end{pmatrix}$$

with $v'_i = \{pv_j\}$ *and* and then evaluate the catalytic efficiency of the candidate by comparing the PBP with the corresponding PBP of known catalysts in the same Space Group as the candidate.

The method starts with the selection of a certain catalyst candidate, e.g. an element from the periodic system or a compound of which the catalytic activity shall be This candidate can be a known element or compound but also a new, hitherto unknown compound.

In order to evaluate the candidate's catalytic efficiency its crystal structure, i.e. its Space Group needs to be known, e.g. according to the International Tables for Crystallography (Th. (2002), Hahn, Theo (ed.), International Tables for Crystallography, Volume A: Space Group Symmetry, International Tables for Crystallography, A(5th ed.), Berlin, New York: Springer-Verlag, doi:10.1107/97809553602060000-100, ISBN 978-0-7923-6590-7). For known compounds and elements the Space Group can e.g. be obtained from the ICSD (Inorganic Crystal Structure Data Base from FIZ Karlsruhe GmbH; https://www.fiz-karlsruhe.de/en/produkte-und-dienstieistungen/inorganic-crystal-structure-database-icsd). The other parameters for the calculation of $\gamma_{ij}$ i.e. the velocity operators vij, the eigenvector $|In\vec{k}\rangle$ for Hamiltonian H at the eigenvalue $E_{n\vec{k}}$ can be obtained from open source or commercial dft codes (see: https://en.wikipedia.org/wiki/List_of_quantum_chemistry_and_solid-state_physics_software). All these operators are well defined in fundamental quantum techniques text books.

In the next step the catalytic efficiency of the candidate can be obtained by comparing the candidate's PBP with the corresponding PBP of known catalysts in the same Space Group as the candidate. The higher the PBP ($\gamma$-value) of a candidate catalyst in a given Space Group the higher the exchange current density for HER.

## Claims

1. Method for evaluating a catalyst comprising the steps of calculating for a catalyst candidate the projected Berry Phase (PBP)

$$\gamma_{ij} = \left| \int_{\vec{k}} F'_{ij}(\vec{k})d\vec{k} \right|$$

wherein

$$F'_{ij}(\vec{k}) = 2Im \sum_{E_n < E_{occ}} \sum_{m \neq n} \frac{\langle n\vec{k}|v'_i|m\vec{k}\rangle\langle m\vec{k}|v_j|n\vec{k}\rangle}{(E_{n\vec{k}} - E_{m\vec{k}})^2}$$

$$p = \begin{pmatrix} 1 & 0 \\ 0 & 0 \end{pmatrix}$$

with $v'_i = \{pv_j\}$ *and* and then evaluate the catalytic efficiency of the candidate by comparing the PBP of the candidate with the corresponding PBP of other known catalysts in the same Space Group as the candidate, wherein the higher the PBP (y-value) of a catalyst candidate in a given Space Group the higher the exchange current density.

2. Method according to claim 1, wherein the catalyst is a catalyst for HER.

3. Method according to claim 1 or 2, wherein the exchange current density is the exchange current density for HER.

4. Method according to claim 1, 2 or 3, wherein the catalyst candidate is an element from the periodic system or a compound of which the catalytic activity shall be determined/ compared.

5. Use of the projected Berry Phase (PBP)

$$\gamma_{ij} = \left| \int_{\vec{k}} F'_{ij}(\vec{k}) d\vec{k} \right|$$

wherein

$$F'_{ij}(\vec{k}) = 2Im \sum_{E_n < E_{occ}} \sum_{m \neq n} \frac{\langle n\vec{k}|v'_i|m\vec{k}\rangle \langle m\vec{k}|v_j|n\vec{k}\rangle}{(E_{n\vec{k}} - E_{m\vec{k}})^2}$$

with $v'_i = \{pv_i\}$ and $\quad p = \begin{pmatrix} 1 & 0 \\ 0 & 0 \end{pmatrix} \quad$ for selecting an electrocatalyst.

6. The use of claim 5 wherein the electrocatalyst is a catalyst for HER.

FIG. 1. The HER catalytic process is determined by the combined effect of electronic conductivity, carrier velocity, carrier mobility, adsorption energy, etc. The effects from the electronic structure can be classified into two groups of bulk contributions and surface contributions. The bulk contribution mainly depends on the band entanglements and the Fermi surface.

FIG. 2. Collection of the experimental results for the catalytic efficiency of well-known non-magnetic transition metals.

(a) The well-known volcano-type plot of exchange current density (logarithm form) for HER as a function of metal–hydrogen bond strength for the collected experimental data from the literature.

(b-d) The PBP and exchange current density (logarithm form) for HER forms a good linear relation for the selected data after having taken the symmetry constraint into account. All the collected elements can be classified into three space groups of P63/mmc (No. 194), Fm-3m (No. 225), and Im-3m (No. 229).

FIG. 3. (a) The plot of PBP vs. work function forms a linear relation for the elements in each space group. (b) Fermi energy-dependent plot of the PBP for the three transition metals of Pt, Au, and Pd. (c) The comparison of energy dispersion for Pt and Au. The black, red, and green curves in (b-c) represent Pt, Pd, and Au, respectively.

Europäisches
Patentamt

European
Patent Office

Office européen
des brevets

# EUROPEAN SEARCH REPORT

Application Number

EP 19 19 9552

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2017/201186 A1 (UNIV HOUSTON SYSTEM [US]) 23 November 2017 (2017-11-23) * the whole document * | 1-6 | INV. C25B1/04 C25B11/04 B01J37/00 |
| A | CATHERINE R. RAJAMATHI ET AL: "Weyl Semimetals as Hydrogen Evolution Catalysts", ADVANCED MATERIALS, vol. 29, no. 19, 1 May 2017 (2017-05-01), page 1606202, XP055532616, DE ISSN: 0935-9648, DOI: 10.1002/adma.201606202 * the whole document * | 1-6 | |
| A | US 2016/222530 A1 (SUBBARAMAN RAM [US] ET AL) 4 August 2016 (2016-08-04) * the whole document * | 1-6 | |

**TECHNICAL FIELDS SEARCHED (IPC)**

C25B
B01J

The present search report has been drawn up for all claims

| Place of search | Date of completion of the search | Examiner |
|---|---|---|
| Munich | 24 March 2020 | Leu, Oana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 19 9552

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2020

| Patent document cited in search report | Publication date | Patent family member(s) | | Publication date |
|---|---|---|---|---|
| WO 2017201186 A1 | 23-11-2017 | CN | 109311000 A | 05-02-2019 |
| | | EP | 3458191 A1 | 27-03-2019 |
| | | US | 2019218674 A1 | 18-07-2019 |
| | | WO | 2017201186 A1 | 23-11-2017 |
| US 2016222530 A1 | 04-08-2016 | US | 2014116890 A1 | 01-05-2014 |
| | | US | 2016222530 A1 | 04-08-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120145532 A

- US 20150010463 A

### Non-patent literature cited in the description

- H. LI ; C. TSAI ; A. L. KOH ; L. CAI ; A. W. CONTRYMAN ; A. H. FRAGAPANE ; J. ZHAO ; H. S. HAN ; H. C. MANOHARAN ; F. ABILD-PEDERSEN. *Nat. Mater.,* 2016, vol. 15, 48

- D. VOIRY ; M. SALEHI ; R. SILVA ; T. FUJITA ; M. CHEN ; T. ASEFA ; V. B. SHENOY ; G. EDA ; M. CHHOWALLA. *Nano Lett.,* 2013, vol. 13, 6222

- U. MAITRA ; U. GUPTA ; M. DE ; R. DATTA ; A. GOVINDARAJ ; C. N. R. RAO. *Angew. Chem. Int. Ed.,* 2013, vol. 52, 13057

- C. TSAI ; K. CHAN ; J. K. NØRSKOV ; F. ABILD-PEDERSEN. *Surf. Sci.,* 2015, vol. 640, 133

- Weyl semimetals as Hydrogen Evolution Cataysts. *Adv, Mater.,* 2017, 1606202

- S. TRASATTI. Work function, electronegativity, and electrochemical behaviour of metals: III. Electrolytic hydrogen evolution in acid solutions. *Journal of Electroanalytical Chemistry and Interfacial Electrochemistry,* 1972, vol. 39 (1), 163-184

- Computational high-throughput screening of electro catalytic materials for hydrogen evolution. J. GREELEY ; T. F. JARAMILLO ; J. BONDE ; I. CHORKENDORFF ; J. K. NØRSKOV. Materials For Sustainable Energy: A Collection of Peer-Reviewed Research and Review Articles from Nature Publishing Group. World Scientific, 2011, 280-284

- P. QUAINO ; F. JUAREZ ; E. SANTOS ; W. SCHMICKLER. Volcano plots in hydrogen electrocatalysis-uses and abuses. *Beilstein journal of nanotechnology,* 2014, vol. 5, 846

- A. R. ZERADJANIN ; J.-P. GROTE ; G. POLYMEROS ; K. J. MAYRHOFER. A Critical Review on Hydrogen Evolution Electro catalysis: Re-exploring the Volcano-relationship. *Electroanalysis,* 2016, vol. 28 (10), 2256-2269

- B. LUNDQVIST ; O. GUNNARSSON ; H. HJELMBERG ; J. NØRSKOV. Theoretical description of molecule-metal interaction and surface reactions. *Surface Science,* 1979, vol. 89 (1-3), 196-225

- J. N0RSKOV. Theory of chemisorption and heterogeneous catalysis. *Physica B+ C,* 1984, vol. 127 (1-3), 193-202

- B. HAMMER ; J. NORSKOV. Electronic factors determining the reactivity of metal surfaces. *Surface Science,* 1995, vol. 343, 211

- H. XIN ; A. VOJVODIC ; J, VOSS ; J. K. NØRSKOV ; F. ABILD-PEDERSEN. Effects of d-band shape on the surface reactivity of transition-metal alloys. *Physical Review B,* 2014, vol. 89 (11), 115114

- Work functions of the transition metals and metal silicides. T. J. DRUMMOND. tech. rep. Sandia National Labs , 1999

- International Tables for Crystallography. International Tables for Crystallography, Volume A: Space Group Symmetry. Springer-Verlag, vol. A